# EUROPEAN PATENT APPLICATION

(11) **EP 4 729 483 A1**
(43) Date of publication of application: **22.04.2026**
(21) Application number: 24223377.3
(22) Date of filing: 27.12.2024
(51) Int. Cl.: C01F 17/235, C09G 1/00, C09K 3/14

(54) **A METHOD FOR MANUFACTURING CERIA NANOPARTICLE FOR SEMICONDUCTOR CMP PROCESS USING SOLID-STATE METHOD**

(30) Priority: 16.10.2024 KR 20240140819
(71) Applicant: Hannam University Industry Academy Cooperation Foundation, Daejeon-si Daejeon 34054 (KR)
(72) Inventor: WOON JUNG, Kim, Daejeon-si (KR)
(74) Representative: Brann AB

(57) **Abstract**

The present invention relates to a method for producing ceria nanoparticles, and more specifically, to a method for producing ceria nanoparticles, comprising the steps of: (a) preparing a ceria precursor; (b) heat-treating the ceria precursor to produce rod-shaped ceria nanoparticles; and (c) pulverizing the ceria nanoparticles.

## Description

### [Technical Field]

The present invention relates to a method for producing ceria nanoparticles, and more specifically, to a method for producing ceria nanoparticles, comprising the steps of: (a) preparing a ceria precursor; (b) heat-treating the ceria precursor to produce rod-shaped ceria nanoparticles; and (c) pulverizing the ceria nanoparticles.

### [Background Art]

As semiconductor devices become more highly integrated and performant, the line width of the wiring pattern becomes finer and the structure becomes more and more multi-layered, so that inter-layer flatness in each process is very important to improve the precision of photolithography.

Currently, the most popular planarization technology is the CMP (chemical-mechanical polishing) process. Depending on the material to be polished, the CMP process is classified as an oxide CMP process, a metal CMP process, a poly-Si CMP process etc.

Initially, a CMP slurry composition containing silica particles was mainly used to polish the oxide film.

However, as the design rule becomes smaller, the device becomes thinner, and high planarization becomes necessary, CMP slurry compositions containing cerium oxide particles which have high polishing selectivity for wafer with heterogeneous films are being applied.

Meanwhile, a slurry composition containing ceria particles has a higher polishing speed than a slurry composition containing silica particles, but scratches may occur on the polishing surface.

Therefore, there is a need for technology development for a polishing slurry composition containing ceria nanoparticles that has excellent thermal stability, dispersion stability, stability over time, polishing speed, polishing efficiency, and selective polishing characteristics, and can minimize scratches on the polished surface.

### [Prior Art Document]

(Patent Document 1) Korean Publication Patent No. 10-2013-0078791
(Patent Document 2) Korean Publication Patent No. 10-2024-0138745

### [Related project]

- Project number: RS-2023-00281517
- Assignment number: 1711199385
- Ministry name: Ministry of Science and ICT/National Research Foundation of Korea
- Research project name: National Semiconductor Research Laboratory Support Core Technology Development Project (R&D)
- Research project name: Development of core technology for next-generation semiconductor materials and processes for CMP process and training of semiconductor experts
- Research period: 2023.08.01-2027.12.31

### [Disclosure]

### [Technical Problem]

The present invention is intended to solve the problems of the above-mentioned prior art, and the purpose of the present invention is to provide a method for producing ceria nanoparticles for a polishing slurry composition which has excellent thermal stability, dispersion stability, stability over time, polishing speed, polishing efficiency and selective polishing characteristics, and which can minimize scratches on a polished surface.

### [Technical Solution]

In order to achieve the above purpose, the present invention provides a method for producing ceria nanoparticles comprising:
(a) a step of preparing a ceria precursor;
(b) a step of heat-treating the ceria precursor to produce rod-shaped ceria nanoparticles; and
(c) a step of pulverizing the ceria nanoparticles.

In one embodiment of the present invention, the step (a) is characterized by pulverizing and stirring the ceria precursor.

In one embodiment of the present invention, the ceria precursor is characterized by using at least one selected from cerium carbonate, cerium sulfate, cerium acetate, cerium nitrate, and cerium chloride.

In one embodiment of the present invention, the step (b) is characterized by heat-treating the ceria precursor at 400 to 800 °C for 1 to 20 hours.

In one embodiment of the present invention, the step (c) is characterized by pulverizing the ceria nanoparticles using at least one selected from a ball mill, a rod mill, a pebble mill, a burston mill, and a pulverizer.

In addition, the present invention provides ceria nanoparticles manufactured by the manufacturing method.

### [Advantageous Effect]

The present invention can provide a method for producing ceria nanoparticles for a polishing slurry composition which has excellent thermal stability, dispersion stability, stability over time, polishing speed, polishing efficiency and selective polishing characteristics, and which can minimize scratches on a polished surface.

### [Brief explanation of drawings]

Figure 1 shows the TGA and DTA results of the cerium carbonate of the present invention.
Figure 2 shows the SEM image of the ceria nanoparticles of the present invention.
Figure 3 shows the TEM image of the ceria nanoparticles of the present invention.
Figure 4 shows the DLS and zeta potential of the slurry composition containing the ceria nanoparticles of the present invention.
Figure 5 shows the XRD results of the ceria nanoparticles of the present invention.

### [Mode for the Invention]

The present invention will be described in detail based on the following examples. The terms, examples, etc. used in the present invention are merely exemplified to explain the present invention in more detail and help the understanding of those skilled in the art, and the scope of the present invention should not be construed as being limited thereto.

Technical terms and scientific terms used in the present invention represent meanings commonly understood by those of ordinary skill in the art to which this invention belongs, unless otherwise defined.

The present invention relates to a method for producing ceria nanoparticles comprising:
(a) a step of preparing a ceria precursor;
(b) a step of heat-treating the ceria precursor to produce rod-shaped ceria nanoparticles; and
(c) a step of pulverizing the ceria nanoparticles.

The above step (a) is a step for preparing a ceria precursor, and the ceria precursor can be pulverized and mixed to manufacture ceria precursor particles of uniform size.

The ceria precursor reacts through a calcination process by heat treatment and is converted into ceria nanoparticles. At this time, if the ceria precursor particles are agglomerated, the reaction with oxygen during the calcination process may not occur throughout the entire ceria precursor but may occur only in a part of the ceria precursor.

In this case, the size, distribution, shape, density, and crystallinity of the manufactured ceria particles may be non-uniform, which may reduce dispersibility, polishing speed, and polishing efficiency.

The present invention uses ceria precursor particles of uniform size by pulverizing and mixing the ceria precursor. Agglomeration of ceria precursor particles is minimized, and reaction with oxygen occurs uniformly throughout the ceria precursor during the calcination process, so that the size, distribution, shape, density, and crystallinity of the manufactured ceria particles are uniform, thereby improving dispersibility, polishing speed, and polishing efficiency.

The above ceria precursor may use at least one selected from cerium carbonate, cerium sulfate, cerium acetate, cerium nitrate, and cerium chloride.

The present invention may use a mixture of cerium carbonate and cerium acetate as a ceria precursor.

At this time, the weight ratio of the cerium carbonate and cerium acetate is preferably 60~80:20~40, and when the weight ratio satisfies the above numerical range, the dispersibility, polishing speed, and polishing efficiency can be maximized.

In addition, the present invention may use a mixture of cerium carbonate, cerium acetate, and cerium nitrate as a ceria precursor.

At this time, the weight ratio of the cerium carbonate, cerium acetate, and cerium nitrate is preferably 100:20~40:5~20, and when the weight ratio satisfies the above numerical range, the dispersibility, polishing speed, and polishing efficiency can be maximized.

The above step (b) can produce ceria nanoparticles in the shape of a rod by heat-treating the ceria precursor.

The present invention preferably heat-treats the ceria precursor in an air atmosphere or an oxygen atmosphere at 400 to 800°C for 1 to 20 hours, and when the heat-treatment conditions satisfy the above numerical range, the dispersibility, polishing speed, and polishing efficiency can be maximized.

In addition, the step (b) can include a first heat treatment step of heating the ceria precursor to produce a first product;
a second heat treatment step of heating the first product to produce a second product;
a third heat treatment step of heating the second product to produce a third product; and
a fourth heat treatment step of heating the third product to produce a fourth product.

By performing the heat treatment step in multiple stages, the size, distribution, shape, density, and crystallinity of the manufactured ceria particles can be uniform, thereby improving dispersibility, polishing speed, and polishing efficiency.

The first heat treatment step can be performed at 400 to 500°C for 1 to 5 hours to manufacture a first product.

If the heat treatment conditions satisfy the above numerical range, the dispersibility, polishing speed, and polishing efficiency can be maximized.

The second heat treatment step can be performed at 510 to 600°C for 1 to 5 hours to manufacture a second product.

If the heat treatment conditions satisfy the above numerical range, the dispersibility, polishing speed, and polishing efficiency can be maximized.

The third heat treatment step can be performed at 610 to 700°C for 1 to 5 hours to manufacture a third product.

If the heat treatment conditions satisfy the above numerical range, the dispersibility, polishing speed, and polishing efficiency can be maximized.

The fourth heat treatment step can be performed at 710~800 °C for 1~5 hours to produce a fourth product.

If the heat treatment conditions satisfy the above numerical range, the dispersibility, polishing speed, and polishing efficiency can be maximized.

The above step (c) is a step of pulverizing the ceria nanoparticles, and the ceria nanoparticles can be pulverized by one or more selected from a ball mill, a rod mill, a pebble mill, a burston mill, and a pulverizer.

The size (diameter) of the pulverized ceria nanoparticles is preferably 10 to 200 nm, and the length is preferably 50 to 700 nm.

In addition, the present invention relates to ceria nanoparticles manufactured by the above manufacturing method.

The ceria nanoparticles have excellent thermal stability, dispersion stability, stability over time, polishing speed, polishing efficiency, and selective polishing characteristics, and can minimize scratches on a polished surface, so they can be used in a polishing slurry composition.

In addition, the ceria nanoparticles may be surface-treated with a copolymer of an acrylate group-containing silane coupling agent, 2-hydroxyethyl acrylate (HEA), 2-hydroxyethyl methacrylate (HEMA), and glycidyl methacrylate.

By using the surface-treated ceria nanoparticles, dispersibility, polishing speed, and polishing efficiency may be improved.

The acrylate group-containing silane coupling agent may include 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, methacryloxymethyltriethoxysilane, methacryloxymethyltrimethoxysilane, and the like.

The weight ratio of the acrylate group-containing silane coupling agent, 2-hydroxyethyl acrylate (HEA), 2-hydroxyethyl methacrylate (HEMA), and glycidyl methacrylate is preferably 2 to 10:100:20 to 50:10 to 30.

The content of the copolymer is preferably 1 to 10 parts by weight per 100 parts by weight of ceria nanoparticles, and when the content satisfies the above numerical range, the dispersibility, polishing speed, and polishing efficiency can be maximized.

In addition, the ceria nanoparticles may be surface-treated with an acrylic mixture containing methyl methacrylate, acrylic acid, and 2-hydroxyethyl acrylate (HEA).

By using the surface-treated ceria nanoparticles, dispersibility, polishing speed, and polishing efficiency can be improved.

It is preferable that the weight ratio of the methyl methacrylate, acrylic acid, and 2-hydroxyethyl acrylate (HEA) is 100:20 to 50:10 to 30.

It is preferable that the content of the acrylic mixture is 1 to 10 parts by weight based on 100 parts by weight of the ceria nanoparticles, and when the content satisfies the above numerical range, the dispersibility, polishing speed, and polishing efficiency can be maximized.

In addition, the ceria nanoparticles may be surface-treated with a silane compound.

As the silane compound, alkoxysilanes such as tetramethoxysilane (TMOS) and tetraethoxysilane (TEOS), sodium silicate, potassium silicate, silicon tetrachloride, etc. may be used without limitation.

The content of the silane compound is preferably 1 to 10 parts by weight based on 100 parts by weight of the ceria nanoparticles, and when the content satisfies the above numerical range, dispersibility, polishing speed, and polishing efficiency can be maximized.

The present invention may use a mixture of tetramethoxysilane and tetraethoxysilane as the silane compound.

At this time, the weight ratio of the tetramethoxysilane and tetraethoxysilane is preferably 60 to 80:20 to 40, and when the weight ratio satisfies the above numerical range, dispersibility, polishing speed, and polishing efficiency can be maximized.

In addition, the ceria nanoparticles can be surface-treated with a composition manufactured by mixing the acrylic mixture and the silane compound.

At this time, the weight ratio of the acrylic mixture and the silane compound is preferably 60~80:20~40, and when the weight ratio satisfies the above numerical range, the dispersibility, polishing speed, and polishing efficiency can be maximized.

The content of the composition is preferably 1 to 10 parts by weight based on 100 parts by weight of the ceria nanoparticles, and when the content satisfies the above numerical range, the dispersibility, polishing speed, and polishing efficiency can be maximized.

The present invention will be described in detail through Examples and Comparative Examples below. The following examples are only exemplified for the practice of the present invention, and the content of the present invention is not limited by the following examples.

### (Example 1)

The cerium carbonate was crushed, mixed, and then dried.

The dried cerium carbonate was heat-treated at 500 °C for 6 hours in an air atmosphere to produce ceria nanoparticles.

The ceria nanoparticles were crushed with a ball mill to produce rod-shaped ceria nanoparticles.

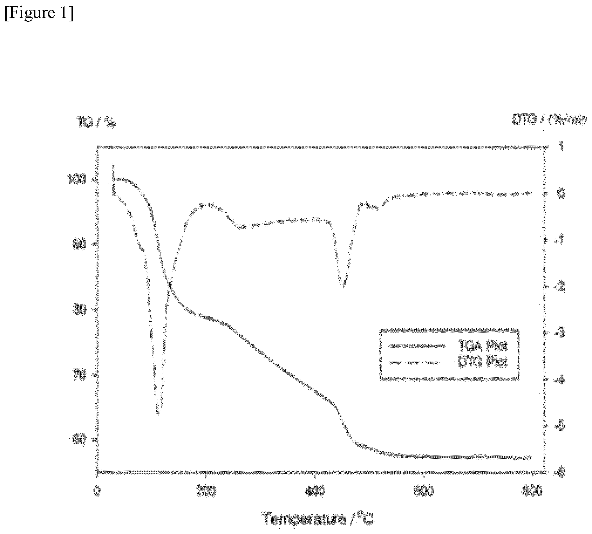

Figure 1 shows the TGA and DTA results of the cerium carbonate of the present invention.

The separation of carbonate from cerium carbonate goes through two stages. The first stage occurs at about 135 °C, at which time the moisture absorbed in the cerium carbonate evaporates. The second stage occurs at 200 to 280 °C, which is the decarbonization process of cerium carbonate, and the separation is almost complete at 300 to 400°C.

In differential thermal analysis, two exothermic peaks can be observed, the first of which occurs when the moisture absorbed in the cerium carbonate evaporates, and the second broad exothermic peak is a phenomenon caused by the separation of CO or CO₂. And then crystallization occurs within the ceria particles, and it can be confirmed that the separation of carbonate is almost complete at 400 °C .

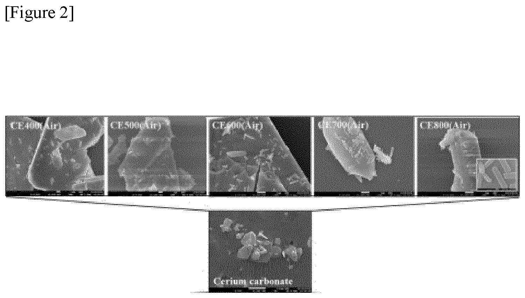

Figure 2 shows a SEM image of the ceria nanoparticles of the present invention.

It can be confirmed that the ceria nanoparticles of the present invention have a dense rod-shaped structure.

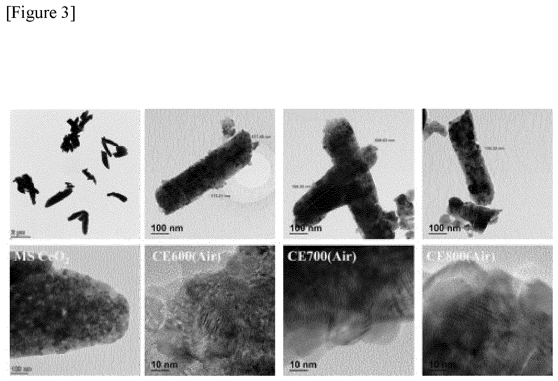

Figure 3 shows a TEM image of the ceria nanoparticles of the present invention.

It can be confirmed that the ceria nanoparticles of the present invention have a dense rod-shaped structure.

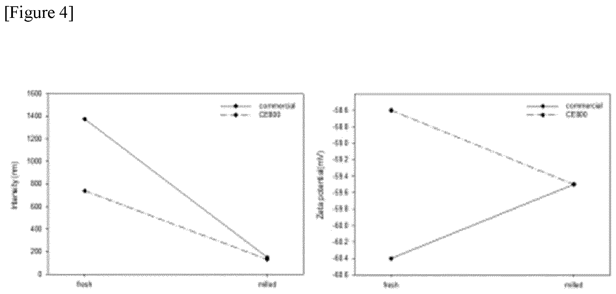

Figure 4 shows the DLS and zeta potential of the slurry composition containing the ceria nanoparticles of the present invention.

As a result of the milling test for evaluating the slurry applicability of the ceria nanoparticles, the particle size of the ceria slurry composition of the present invention was 131.1 nm (D50), which confirms that the particle size is reduced by about 13% compared with the commercial ceria slurry composition.

In addition, the ceria slurry composition of the present invention shows similar pH, electrical conductivity, and zeta potential to the commercial ceria slurry composition.

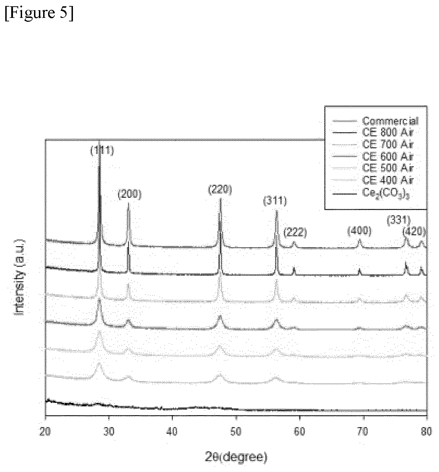

Figure 5 shows the XRD results of the ceria nanoparticles of the present invention.

The ceria nanoparticles of the present invention show peaks at the (111), (200), (220), (331), and (222) planes, which are representative lattice structures of ceria, and it can be confirmed that the ceria crystal structure is formed.

In addition, the present invention analyzed the surface area, pore volume, and pore size of ceria nanoparticles according to the heat treatment temperature.

The specific surface area of cerium carbonate was 1.6 m²/g, the pore volume was 0.005 cc/g, and the pore size was 12.72 nm.

The specific surface area of ceria nanoparticles calcined at 400°C is 117 m²/g, the pore volume is 0.096 cc/g, and the pore size is 3.29 nm.

The specific surface area of ceria nanoparticles calcined at 500°C is 94.5 m²/g, the pore volume is 0.083 cc/g, and the pore size is 3.52 nm.

The specific surface area of ceria nanoparticles calcined at 600°C is 61.8 m²/g, the pore volume is 0.062 cc/g, and the pore size is 4.06 nm.

The specific surface area of ceria nanoparticles calcined at 700°C is 17.6 m²/g, the pore volume is 0.036 cc/g, and the pore size is 8.19 nm.

The specific surface area of ceria nanoparticles calcined at 800°C is 4.1 m²/g, pore volume was 0.021 cc/g, and pore size was 20.6 nm.

As the cerium carbonate is heat-treated, H₂O and CO₂ are released and the surface area increases, and as the heat treatment temperature increases, the crystallinity of ceria increases and shrinkage occurs, causing the surface area to decrease again.

In addition, as the cerium carbonate is heat-treated, the pore volume increases, and as the heat treatment temperature increases, the pore volume decreases again.

### (Example 2)

Ceria nanoparticles were prepared in the same manner as in Example 1, except that heat treatment was performed at 300°C.

### (Example 3)

Ceria nanoparticles were prepared in the same manner as in Example 1, except that heat treatment was performed at 900 °C.

### (Example 4)

Ceria nanoparticles were prepared in the same manner as in Example 1, except that instead of cerium carbonate, a mixture of cerium carbonate and cerium acetate was used.

At this time, the weight ratio of cerium carbonate and cerium acetate was adjusted to 70:30.

### (Example 5)

Ceria nanoparticles were produced in the same manner as in Example 1, except that instead of heat-treating cerium carbonate at 500°C for 6 hours, a first heat treatment step of heating cerium carbonate at 450 °C for 1.5 hours to produce a first product;
a second heat treatment step of heating the first product at 550 °C for 1.5 hours to produce a second product;
a third heat treatment step of heating the second product at 650 °C for 1.5 hours to produce a third product; and
a fourth heat treatment step of heating the third product at 750°C for 1.5 hours to produce a fourth product were used.

### (Example 6)

An acrylic mixture was prepared by mixing methyl methacrylate, acrylic acid, and 2-hydroxyethyl acrylate (HEA).

At this time, the weight ratio of methyl methacrylate, acrylic acid, and 2-hydroxyethyl acrylate (HEA) was adjusted to 100:30:20.

The ceria nanoparticles prepared in Example 1 were surface-treated with the acrylic mixture.

At this time, the content of the acrylic mixture was adjusted to 5 parts by weight per 100 parts by weight of ceria nanoparticles.

### (Comparative Example 1)

Ceria nanoparticles were prepared in the same manner as in Example 1, except that the steps of crushing, mixing, and drying cerium carbonate were not used.

### (Polishing target)

The flat silicon oxide films and silicon nitride films were used as wafers.

### (CMP process conditions)

The polishing process conditions are shown in Table 1 below.

**[Table 1]**

| CMP parameter | CMP condition |
|---|---|
| equipment | AP-300(CTS) |
| polishing pad | IC-1010(DAW) |
| Slurry inflow speed | 250mℓ/min |
| head speed | 87rpm |
| table speed | 93rpm |
| pressure | 5.0psi |
| polishing time | 60sec |

### (polishing speed)

The thickness of the specimen wafer before and after polishing was confirmed using ST-5030 (K-MAC Corp.). To prevent errors due to measurement, 49 identical points were measured in the X-axis direction from the center to the edge of each wafer and averaged (unit: Å/min).

### (uniformity)

After polishing, the uniformity of the specimen wafer was measured.

### (scratch or not)

After polishing, the substrate was washed, and defects and scratches on the substrate were observed using an optical microscope and graded as very excellent, excellent, average, and poor.

The properties of the polishing slurry compositions comprising ceria nanoparticles obtained from the examples and comparative examples were measured and shown in Table 2 below.

**[Table 2]**

| | Polishing speed (Å/min) | | Uniformity (%) | Scratch or not |
|---|---|---|---|---|
| | Silicon oxide | Silicon nitride | | |
| Example 1 | 1,352 | 99 | 9.5 | excellent |
| Example 2 | 1,078 | 101 | 12.6 | average |
| Example 3 | 1,150 | 102 | 13.3 | average |
| Example 4 | 1,506 | 96 | 7.7 | very excellent |
| Example 5 | 1,582 | 92 | 6.9 | very excellent |
| Example 6 | 1,611 | 95 | 7.2 | very excellent |
| Comparative Example 1 | 1,015 | 128 | 15.8 | poor |

From the results in Table 2 above, it can be seen that Examples 1 to 6 have high polishing rates for silicon oxide films and low polishing rates for silicon nitride films, showing excellent selective polishing characteristics.

That is, it is judged that the compositions of Examples 1 to 6 have excellent stop layer formation functions for silicon nitride films.

In addition, it can be seen that Examples 1 to 6 have excellent uniformity and scratch occurrence characteristics.

In particular, Examples 1, 4 to 6 have the best characteristics.

On the other hand, it can be seen that Comparative Example 1 has inferior characteristics compared to Examples.

## Claims

1. A method for manufacturing ceria nanoparticles comprising:
(a) a step of preparing a ceria precursor;
(b) a step of heat-treating the ceria precursor to produce rod-shaped ceria nanoparticles; and
(c) a step of pulverizing the ceria nanoparticles.

2. A method for manufacturing ceria nanoparticles according to claim 1,
wherein the step (a) comprises pulverizing and stirring the ceria precursor.

3. A method for manufacturing ceria nanoparticles according to claim 2,
wherein the ceria precursor is **characterized by** using at least one selected from cerium carbonate, cerium sulfate, cerium acetate, cerium nitrate, and cerium chloride.

4. A method for manufacturing ceria nanoparticles according to claim 3,
wherein the step (b) is **characterized by** heat-treating the ceria precursor at 400 to 800 °C for 1 to 20 hours.

5. A method for manufacturing ceria nanoparticles according to claim 4,
wherein the step (c) is **characterized by** pulverizing the ceria nanoparticles using at least one selected from a ball mill, a rod mill, a pebble mill, a burston mill, and a pulverizer.

6. A ceria nanoparticles manufactured by the manufacturing method of claim 1.
